# EUROPÄISCHE PATENTSCHRIFT

(11) **EP 2 686 141 B1**
(45) Veröffentlichungstag und Bekanntmachung des Hinweises auf die Patenterteilung: **27.12.2017**
(21) Anmeldenummer: 12703088.0
(22) Anmeldetag: 06.02.2012
(51) Int. Cl.: B25F 5/00, B24B 23/00, F16D 63/00

(54) **WERKZEUGMASCHINENBREMSVORRICHTUNG**
MACHINE TOOL BRAKING APPARATUS
DISPOSITIF DE FREINAGE DE MACHINE-OUTIL

(30) Priorität: 18.03.2011 DE 102011005809
(43) Veröffentlichungstag der Anmeldung: 22.01.2014
(73) Patentinhaber: Robert Bosch GmbH, 70442 Stuttgart (DE)
(72) Erfinder: ESENWEIN, Florian, 73066 Uhingen-Holzhausen (DE)
(86) Internationale Anmeldenummer: PCT/EP2012/051922
(87) Internationale Veröffentlichungsnummer: WO 2012/126666

(56) Entgegenhaltungen:
- EP-A1- 1 470 882
- DE-A1- 3 722 629
- DE-A1- 10 040 332
- DE-A1- 19 510 291

## Beschreibung

### Stand der Technik

Aus der DE 195 10 291 C2 ist bereits eine Werkzeugmaschinenbremsvorrichtung einer tragbaren Werkzeugmaschine bekannt, die eine mechanische Bremseinheit und eine Abtriebseinheit aufweist. Hierbei umfasst die Bremseinheit ein beweglich gelagertes Bremselement und die Abtriebseinheit umfasst ein Abtriebselement. Weitere Beispiele sind aus der DE19510291A1 oder DE3722629A1 bekannte. Offenbarung der Erfindung
Die Erfindung geht aus von einer Werkzeugmaschinenbremsvorrichtung, insbesondere von einer Handwerkzeugmaschinenbremsvorrichtung, einer tragbaren Werkzeugmaschine, mit zumindest einer mechanischen Bremseinheit, die zumindest ein beweglich gelagertes Bremselement aufweist, und mit zumindest einer Abtriebseinheit, die zumindest ein Abtriebselement aufweist.
Es wird vorgeschlagen, dass die Bremseinheit zumindest ein Betätigungselement aufweist, das dazu vorgesehen ist, das Bremselement zumindest in einem Betriebszustand zumindest im Wesentlichen senkrecht zu einer Rotationsachse des Abtriebselements zu bewegen. Besonders bevorzugt ist die Bremseinheit dazu vorgesehen, eine Drehbewegung infolge von Massenträgheitsmomenten einer Abtriebswelle der Abtriebseinheit, insbesondere einer Spindel, und/oder eines auf der Abtriebswelle montierten Bearbeitungswerkzeugs bei einem Abschalten der tragbaren Werkzeugmaschine abzubremsen. Unter einer "tragbaren Werkzeugmaschine" soll hier insbesondere eine Werkzeugmaschine, insbesondere eine Handwerkzeugmaschine, verstanden werden, die von einem Bediener transportmaschinenlos transportiert werden kann. Die tragbare Werkzeugmaschine weist insbesondere eine Masse auf, die kleiner ist als 50 kg, bevorzugt kleiner als 20 kg und besonders bevorzugt kleiner als 10 kg. Der Ausdruck "mechanische Bremseinheit" soll hier insbesondere eine Bremseinheit definieren, die dazu vorgesehen ist, Bremselemente der Bremseinheit infolge eines Trägheitsmoments und/oder infolge eines Antriebsmoments in eine Bremsstellung und/oder in eine Lösestellung zu überführen, insbesondere entkoppelt von einer magnetischen Kraft. Unter einer "Bremsstellung" soll hier insbesondere eine Stellung des Bremselements verstanden werden, in der zumindest eine Bremskraft zu einer Reduzierung einer Geschwindigkeit, insbesondere um zumindest mehr als 50 %, bevorzugt zumindest mehr als 65 % und besonders bevorzug um zumindest meht als 80 %, eines sich bewegenden Bauteils auf das sich bewegende Bauteil in zumindest einem Betriebszustand ausgeübt wird. Der Begriff "Lösestellung" soll hier insbesondere eine Stellung des Bremselements definieren, in der eine Einwirkung der Bremskraft zu einer Reduzierung der Geschwindigkeit auf das sich bewegende Bauteil zumindest im Wesentlichen verhindert wird.

Die mechanische Bremseinheit ist bevorzugt dazu vorgesehen, das Bauteil insbesondere in einem Zeitraum größer als 0,1 s, bevorzugt größer als 0,5 s und besonders bevorzugt kleiner als 3 s, ausgehend von einer Arbeitsgeschwindigkeit, abzubremsen, insbesondere auf eine Geschwindigkeit abzubremsen, die kleiner als 50 % der Arbeitsgeschwindigkeit ist, bevorzugt kleiner als 20 % der Arbeitsgeschwindigkeit ist und besonders bevorzugt auf eine Geschwindigkeit von 0 m/s abzubremsen. Hierbei weist das Bremselement zumindest einen Bremsbelag auf, der an dem Bremselement fixiert ist. Der Bremsbelag kann mittels einer formschlüssigen, kraftschlüssigen und/oder stoffschlüssigen Verbindung, wie beispielsweise einer Klebeverbindung, einer Nietverbindung, einer Schraubverbindung oder einer Verbindung, die mittels eines Sintervorgangs oder mittels eines Spritzverfahrens usw. erzeugt wurde, am Bremselement fixiert sein. Der Bremsbelag kann hierbei als Sinterbremsbelag, als organischer Bremsbelag, als Bremsbelag aus Karbon, als Bremsbelag aus Keramik oder als anderer, einem Fachmann als sinnvoll erscheinenden Bremsbelag ausgebildet sein. Das Bremselement ist vorteilhafterweise relativ zu einer Abtriebswelle der Abtriebseinheit, insbesondere einer Spindel, beweglich gelagert, insbesondere drehbar gelagert um eine Rotationsachse der Abtriebswelle um einen Winkel größer als 2°, bevorzugt größer als 5° und besonders bevorzugt kleiner als 45°. Der Ausdruck "beweglich gelagert" soll hier insbesondere eine Lagerung des Bremselements definieren, wobei das Bremselement, insbesondere entkoppelt von einer elastischen Verformung des Bremselements, eine Bewegungsmöglichkeit entlang zumindest einer Strecke größer als 1 mm, bevorzugt größer als 10 mm und besonders bevorzugt größer als 50 mm aufweist und/oder eine Bewegungsmöglichkeit um zumindest eine Achse um einen Winkel größer als 5°, bevorzugt größer als 20° und besonders bevorzugt kleiner als 45° aufweist. Besonders bevorzugt ist das Bremselement zumindest relativ zum Betätigungselement beweglich gelagert.

Unter einer "Abtriebseinheit" soll hier insbesondere eine Einheit verstanden werden, die mittels einer Antriebseinheit der tragbaren Werkzeugmaschine antreibbar ist und von der Antriebseinheit erzeugte Kräfte und/oder Drehmomente auf ein Bearbeitungswerkzeug überträgt. Bevorzugt ist das Abtriebselement der Abtriebseinheit als Zahnrad ausgebildet. Besonders bevorzugt ist das Abtriebselement als Tellerrad ausgebildet. Es ist jedoch auch denkbar, dass das Abtriebselement eine andere, einem Fachmann als sinnvoll erscheinende Ausgestaltung aufweist, wie beispielsweise als Welle usw. Die Abtriebseinheit ist bevorzugt als Winkelgetriebe ausgebildet. Unter einem "Winkelgetriebe" soll hier insbesondere ein Getriebe verstanden werden, das eine relativ zu einer Eingangswelle abgewinkelt angeordnete Ausgangswelle aufweist, wobei die Rotationsachsen der Eingangswelle und der Ausgangswelle vorzugsweise einen gemeinsamen Schnittpunkt aufweisen. Unter "abgewinkelt angeordnet" soll hier insbesondere eine Anordnung einer Achse relativ zu einer weiteren Achse verstanden werden, insbesondere von zwei sich schneidenden Achsen, wobei die zwei Achsen einen von 180° abweichenden Winkel einschließen. Bevorzugt schließen eine Rotationsachse der Eingangswelle und eine Rotationsachse der Ausgangswelle in einem montierten Zustand der als Winkelgetriebe ausgebildeten Abtriebseinheit einen Winkel von 90° ein. Unter einer "Eingangswelle" soll hier insbesondere eine Welle verstanden werden, die Kräfte und/oder Drehmomente in die als Winkelgetriebe ausgebildete Abtriebseinheit einleitet. Unter einer "Ausgangswelle" soll hier insbesondere eine Welle, insbesondere eine Spindel der Abtriebseinheit, verstanden werden, die Kräfte und/oder Drehmomente beispielsweise auf ein mit der Ausgangswelle drehfest verbundenes Bearbeitungswerkzeug überträgt. Unter "drehfest" soll insbesondere eine Verbindung verstanden werden, die ein Drehmoment und/oder eine Drehbewegung zumindest im Wesentlichen unverändert überträgt. Unter "zumindest im Wesentlichen unverändert übertragen" soll hier insbesondere eine bis auf einen Verlust infolge von Reibung und/oder von Toleranzen vollständige Übertragung von Kräften und/oder Drehmomenten von einem Bauteil auf ein weiteres Bauteil verstanden werden. Unter "im Wesentlichen senkrecht" soll hier insbesondere eine Ausrichtung einer Richtung relativ zu einer Bezugsrichtung verstanden werden, wobei die Richtung und die Bezugsrichtung, insbesondere in einer Ebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Mittels der erfindungsgemäßen Ausgestaltung der Werkzeugmaschinenbremsvorrichtung kann konstruktiv einfach eine Bremskraft zu einem Abbremsen eines sich bewegenden Bauteils, insbesondere der als Spindel ausgebildeten Ausgangswelle der Abtriebseinheit, erzeugt werden. Es kann somit vorteilhaft eine Drehbewegung infolge von Massenträgheitsmomenten eines Werkzeugs bei einem Abschalten der tragbaren Werkzeugmaschine abgebremst werden.

Des Weiteren wird vorgeschlagen, dass das Betätigungselement zumindest in einem Betriebszustand formschlüssig mit einem Auslöseelement des Bremselements zusammenwirkt. Vorteilhafterweise ist das Auslöseelement dazu vorgesehen, mittels eines Zusammenwirkens mit dem Betätigungselement das Bremselement in einer Lösestellung und/oder in einer Bremsstellung zu halten und/oder in eine Lösestellung und/oder in eine Bremsstellung zu bewegen, insbesondere auf einer durch das Zusammenwirken des Betätigungselements und des Auslöseelements vorgegebenen Bewegungsbahn. Bevorzugt hintergreifen sich das Auslöseelement und das Betätigungselement zumindest in einem Betriebszustand gegenseitig. Das Betätigungselement ist hierbei besonders bevorzugt als hakenförmiger Fortsatz ausgebildet, der dazu vorgesehen ist, mit dem Auslöseelement, das korrespondierend mit dem hakenförmigen Fortsatz ausgebildet ist, formschlüssig zusammenzuwirken. In einer alternativen Ausgestaltung der Werkzeugmaschinenbremsvorrichtung greift das Betätigungselement zumindest in einem Betriebszustand in das Auslöseelement ein. Es ist jedoch auch denkbar, dass das Auslöseelement zumindest in einem Betriebszustand in das Betätigungselement eingreift. Vorzugsweise ist das Auslöseelement einstückig mit dem Bremselement ausgebildet. Unter "einstückig" soll insbesondere zumindest stoffschlüssig verbunden verstanden werden, beispielsweise durch einen Schweißprozess, einen Klebeprozess, einen Anspritzprozess und/oder einen anderen, einem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling. Es ist jedoch auch denkbar, dass das Auslöseelement mittels einer formschlüssigen und/oder kraftschlüssigen Verbindung mit dem Bremselement verbunden ist. Es kann vorteilhaft ein zuverlässiges Halten des Bremselements in einer Lösestellung, in der eine Wirkung einer Bremskraft unterbunden ist, erreicht werden.

Vorzugsweise ist das Betätigungselement drehfest mit dem Abtriebselement verbunden. Bevorzugt ist das Betätigungselement einstückig mit dem Abtriebselement ausgebildet. In einer alternativen Ausgestaltung ist das Betätigungselement mittels einer Schraubverbindung drehfest mit dem Abtriebselement verbunden. Es ist jedoch auch denkbar, dass das Betätigungselement mittels einer anderen, einem Fachmann als sinnvoll erscheinenden formschlüssigen, kraftschlüssigen und/oder stoffschlüssigen Verbindung, wie beispielsweise einer Klebeverbindung, einer Nietverbindung, einer Schraubverbindung oder einer Verbindung, die mittels eines Sintervorgangs oder eines Spritzgießverfahrens usw. erzeugt wurde, mit dem Abtriebselement verbunden ist. Es kann konstruktiv einfach eine Bewegung des Bremselements mittels des Betätigungselements in Abhängigkeit einer Bewegung des Abtriebselements erreicht werden. Somit kann vorteilhaft bei einer Unterbrechung einer Drehmomentübertragung auf das Abtriebselement eine Relativbewegung des Abtriebselements relativ zu einer Ausgangswelle der Abtriebseinheit, insbesondere einer Spindel, zu einer Bewegung des Bremselements genutzt werden. Es kann vorteilhaft auf elektrische und/oder elektronische Bauteile zur Bewegung des Bremselements verzichtet werden.

Ferner wird vorgeschlagen, dass die Bremseinheit zumindest ein Mitnehmerelement aufweist, an dem das Bremselement schwenkbar gelagert ist. Vorzugsweise ist das Mitnehmerelement drehfest mit einer Abtriebswelle der Abtriebseinheit, insbesondere einer Spindel, verbunden. Somit ist das Mitnehmerelement zusammen mit der Abtriebswelle bevorzugt relativ zum Abtriebselement beweglich gelagert. Das Bremselement ist vorteilhafterweise als Bremshebel ausgebildet, der an einem Ende schwenkbar am Mitnehmerelement gelagert ist. Das Bremselement kann mittels eines Federelements der Bremseinheit relativ zum Mitnehmerelement in Richtung einer Lösestellung und/oder in Richtung einer Bremsstellung vorgespannt sein. Das Federelement kann hierbei als Druckfeder, als Zugfeder, als Schenkelfeder, als Blattfeder, als Federband oder als anderes einem Fachmann als sinnvoll erscheinendes Federelement ausgebildet sein. Es kann konstruktiv einfach eine Fliehkraft zu einer Bewegung des Bremselements in eine Bremsstellung und/oder in eine Lösestellung des Bremselements genutzt werden.

Vorteilhafterweise weist die Bremseinheit zumindest ein Gegenbremselement auf, das das Bremselement, in einer senkrecht zur Rotationsachse des Abtriebselements verlaufenden Ebene betrachtet, zumindest teilweise entlang einer Umfangsrichtung umgibt. Besonders bevorzugt ist das Gegenbremselement dazu vorgesehen, mittels eines Zusammenwirkens mit dem Bremselement eine Bewegungsenergie, insbesondere eine Bewegungsenergie der sich relativ zum Gegenbremselement bewegenden Spindel und/oder eine Bewegungsenergie des sich relativ zum Gegenbremselement bewegenden Bremselements, in eine Wärmeenergie umzuwandeln. Hierbei werden das Bremselement und das Gegenbremselement zu einer Erzeugung einer Bremskraft, die einer Drehbewegung der Spindel entgegenwirkt, in direkten Kontakt miteinander gebracht. Das Gegenbremselement kann hierbei aus Sinterbronze, Stahl, nitriertem Stahl, Aluminium oder einem anderen oberflächenbehandelten Stahl und/oder Metall ausgebildet sein. Somit ist die mechanische Bremseinheit bevorzugt als Reibbremse ausgebildet. Es kann konstruktiv einfach eine Bremskraft mittels eines Zusammenwirkens des Bremselements und des Gegenbremselements erreicht werden.

Vorzugsweise ist das Gegenbremselement als Bremstrommel ausgebildet. Die Bremstrommel weist besonders bevorzugt eine zylinderförmige Form auf, insbesondere an einer dem Bremselement zugewandten Seite der Bremstrommel. Es ist jedoch auch denkbar, dass die Bremstrommel eine andere, einem Fachmann als sinnvoll erscheinende Form aufweist, wie beispielsweise konisch, gegenläufig konisch, konkav, konvex usw. Ferner ist es ebenfalls denkbar, dass die Bremstrommel gelocht ausgebildet ist und/oder auf der dem Bremselement zugewandten Seite der Bremstrommel Ausnehmungen in Form von Rillen o. dgl. aufweist, die dazu vorgesehen sind, beispielsweise ein Schmiermittel von einer Kontaktfläche zwischen Bremselement und Bremstrommel weg zu führen. Die Bremstrommel, insbesondere die dem Bremselement zugewandte Seite der Bremstrommel, erstreckt sich, in der senkrecht zur Rotationsachse des Abtriebselements verlaufenden Ebene betrachtet, entlang der Umfangsrichtung um 360°. Besonders bevorzugt ist die Bremstrommel gehäusefest in einem Lagerflansch und/oder in einem Getriebegehäuse der Abtriebseinheit angeordnet. Vorteilhafterweise ist die Bremstrommel mittels einer kraftschlüssigen, formschlüssigen und/oder einer stoffschlüssigen Verbindung mit dem Lagerflansch und/oder dem Getriebegehäuse verbunden. Eine Ausgestaltung des Lagerflanschs und/oder des Getriebegehäuses mit der Bremstrommel aus beispielsweise einem einzigen Gussteil ist ebenfalls denkbar. Der Lagerflansch und/oder das Getriebegehäuse können aus einem Metall, einer Metalllegierung und/oder aus einem Kunststoff hergestellt sein. Bevorzugt ist der Lagerflansch und/oder das Getriebegehäuse als Metallgussteil ausgebildet. Es kann vorteilhaft eine mechanische Bremseinheit gebildet werden, die als Reibbremse ausgebildet ist.

Zudem wird vorgeschlagen, dass die Bremseinheit zumindest ein Kurvengetriebe umfasst, das zumindest ein Kurvenglied aufweist, das dazu vorgesehen ist, zu einer Bewegung des Bremselements mit dem Betätigungselement zusammenzuwirken. Unter einem "Kurvengetriebe" soll hier insbesondere ein Mechanismus verstanden werden, der infolge einer Bewegung des Betätigungselements und infolge eines Zusammenwirkens mit dem Kurvenglied ein Bauteil ansteuert, das infolgedessen eine durch das Zusammenwirken des Betätigungselements und des Kurvenglieds vorgegebene Bewegung ausführt. Bevorzugt ist das Kurvenglied als Steuerausnehmung ausgebildet. Unter einer "Steuerausnehmung" soll hier insbesondere eine Materialaussparung verstanden werden, in die das Betätigungselement zur Erzeugung einer Bewegung eingreift, wobei das Betätigungselement und die Steuerausnehmung insbesondere relativ zueinander bewegbar sind. Es kann konstruktiv einfach mittels des Kurvengetriebes eine definierte Bewegungsbahn des Bremselements bei einer Bewegung aus einer Lösestellung und/oder aus einer Bremsstellung erreicht werden.

Vorzugsweise ist das Kurvenglied an dem Bremselement angeordnet. Besonders bevorzugt ist das Bremselement in der alternativen Ausgestaltung der Werkzeugmaschinenbremsvorrichtung einstückig mit dem Mitnahmeelement ausgebildet. Hierbei ist das Bremselement vorteilhafterweise mittels eines federelastischen Teilbereichs des Mitnahmeelements und/oder mittels eines einstückig mit dem Bremselement und dem Mitnehmerelement ausgebildeten Filmscharnier usw. relativ zum Mitnehmerelement schwenkbar gelagert. Es kann vorteilhaft eine kompakte Werkzeugmaschinenbremsvorrichtung erreicht werden.

In einer weiteren alternativen Ausgestaltung ist es denkbar, dass die Bremseinheit als Montagemodul ausgebildet ist. Der Ausdruck "Montagemodul" soll hier insbesondere einen Aufbau einer Einheit definieren, bei dem mehrere Bauteile vormontiert werden und die Einheit als Ganzes in einem Gesamtsystem, insbesondere in der tragbaren Werkzeugmaschine, montiert wird. Das Montagemodul weist bevorzugt zumindest ein Befestigungselement auf, das dazu vorgesehen ist, das Montagemodul mit dem Gesamtsystem lösbar zu verbinden. Vorteilhafterweise kann das Montagemodul insbesondere mit weniger als 10 Befestigungselementen von dem Gesamtsystem demontiert werden, bevorzugt mit weniger als 8 Befestigungselementen und besonders bevorzugt mit weniger als 5 Befestigungselementen. Die Befestigungselemente sind besonders bevorzugt als Schrauben ausgebildet. Es ist jedoch auch denkbar, dass die Befestigungselemente als andere, einem Fachmann als sinnvoll erscheinende Elemente, wie beispielsweise Schnellspannelemente, werkzeuglos betätigbare Befestigungselemente usw., ausgebildet sind. Vorzugsweise kann zumindest eine Funktion des Montagemoduls in einem von dem Gesamtsystem demontierten Zustand gewährleistet werden. Das Montagemodul kann besonders bevorzugt von einem Endnutzer demontiert werden. Somit ist das Montagemodul als austauschbare Einheit ausgebildet, die durch ein weiteres Montagemodul ersetzt werden kann, wie beispielsweise im Fall eines Defekts des Montagemoduls oder einer Funktionserweiterung und/oder Funktionsänderung des Gesamtsystems. Mittels einer Ausgestaltung der Bremseinheit als Montagemodul kann vorteilhaft ein breites Einsatzspektrum der Werkzeugmaschinenbremsvorrichtung erreicht werden. Eine Integration in bereits bestehende tragbare Werkzeugmaschinen kann ferner konstruktiv einfach erreicht werden. Des Weiteren können somit Produktionskosten vorteilhaft gering gehalten werden.

Die Erfindung geht ferner aus von einer tragbaren Werkzeugmaschine, insbesondere von einer tragbaren Handwerkzeugmaschine, mit einer erfindungsgemäßen Werkzeugmaschinenbremsvorrichtung, insbesondere mit einer Handwerkzeugmaschinenbremsvorrichtung. Die tragbare Werkzeugmaschine kann hierbei als Winkelschleifer, als Bohrmaschine, als Handkreissäge, als Meißelhammer und/oder als Bohrhammer usw. ausgebildet sein. Es kann vorteilhaft eine Sicherheitsfunktion für einen Bediener der tragbaren Werkzeugmaschine erreicht werden.

Die erfindungsgemäße Werkzeugmaschinenbremsvorrichtung und/oder die erfindungsgemäße tragbare Werkzeugmaschine soll hierbei nicht auf die oben beschriebene Anwendung und Ausführungsform beschränkt sein. Insbesondere kann die erfindungsgemäße Werkzeugmaschinenbremsvorrichtung und/oder die erfindungsgemäße tragbare Werkzeugmaschine zu einer Erfüllung einer hierin beschriebenen Funktionsweise eine von einer hierin genannten Anzahl von einzelnen Elementen, Bauteilen und Einheiten abweichende Anzahl aufweisen.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Werkzeugmaschine mit einer erfindungsgemäßen Werkzeugmaschinenbremsvorrichtung in einer schematischen Darstellung,
- Fig. 2: eine Schnittansicht eines von einem Motorgehäuse der erfindungsgemäßen tragbaren Werkzeugmaschine demontierten Getriebegehäuses der erfindungsgemäßen tragbaren Werkzeugmaschine und der erfindungsgemäßen Werkzeugmaschinenbremsvorrichtung in einer schematischen Darstellung,
- Fig. 3: eine weitere Schnittansicht des Getriebegehäuses und der erfindungsgemäßen Werkzeugmaschinenbremsvorrichtung in einem ungebremsten Zustand in einer schematischen Darstellung,
- Fig. 4: eine weitere Schnittansicht des Getriebegehäuses und der erfindungsgemäßen Werkzeugmaschinenbremsvorrichtung in einem gebremsten Zustand in einer schematischen Darstellung,
- Fig. 5: eine Detailansicht einer Bremseinheit der erfindungsgemäßen Werkzeugmaschinenbremsvorrichtung in einer schematischen Darstellung,
- Fig. 6: eine Detailansicht einer Trägerplatte der Bremseinheit der erfindungsgemäßen Werkzeugmaschinenbremsvorrichtung in einer schematischen Darstellung,
- Fig. 7: eine Detailansicht eines Mitnehmerelements der Bremseinheit mit daran angeordneten Bremselementen der Bremseinheit der erfindungsgemäßen Werkzeugmaschinenbremsvorrichtung in einer schematischen Darstellung,
- Fig. 8: eine Schnittansicht einer alternativen Ausführung einer erfindungsgemäßen Werkzeugmaschinenbremsvorrichtung in einer schematischen Darstellung,
- Fig. 9: eine Detailansicht eines alternativen Abtriebselements einer alternativen Abtriebseinheit einer alternativen erfindungsgemäßen Werkzeugmaschinenbremsvorrichtung in einer schematischen Darstellung,
- Fig. 10: eine Detailansicht einer weiteren alternativen Ausführung einer erfindungsgemäßen Werkzeugmaschinenbremsvorrichtung in einer schematischen Darstellung und
- Fig. 11: eine Detailansicht eines Abtriebselements der alternativen Werkzeugmaschinenbremsvorrichtung in einer schematischen Darstellung.

### Beschreibung der Ausführungsbeispiele

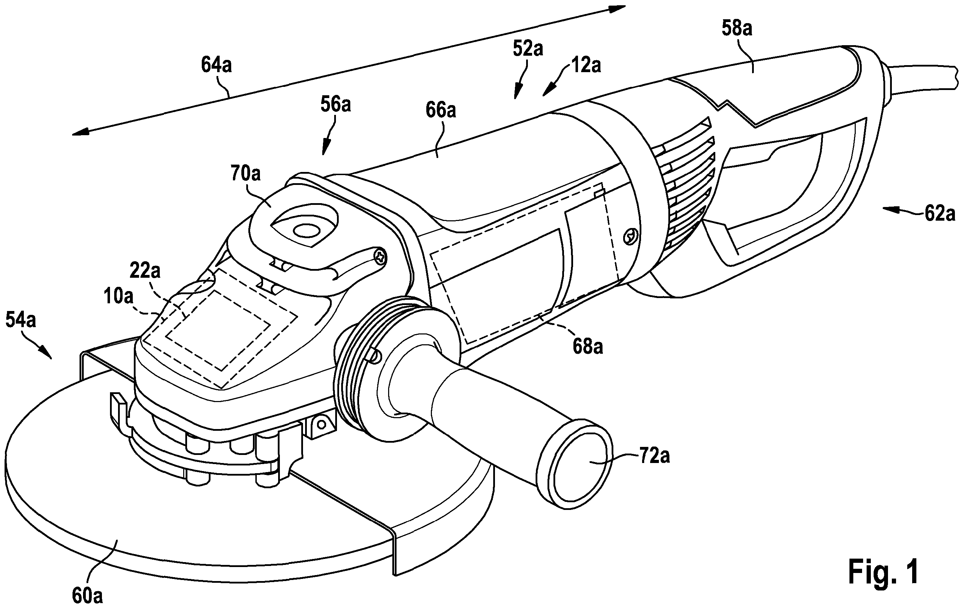

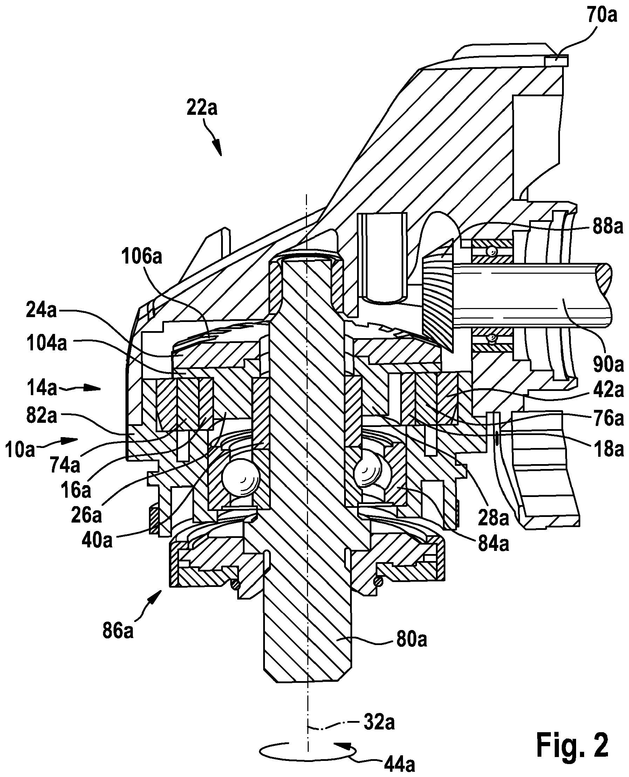

Figur 1 zeigt eine als Winkelschleifer 52a ausgebildete tragbare Werkzeugmaschine 12a mit einer Werkzeugmaschinenbremsvorrichtung 10a. Der Winkelschleifer 52a umfasst eine Schutzhaubeneinheit 54a, ein Werkzeugmaschinengehäuse 56a und einen Haupthandgriff 58a. Der Haupthandgriff 58a erstreckt sich ausgehend vom Werkzeugmaschinengehäuse 56a an einer einem Bearbeitungswerkzeug 60a abgewandten Seite 62a des Werkzeugmaschinengehäuses 56a in eine vom Werkzeugmaschinengehäuse 56a abgewandte Richtung, die zumindest im Wesentlichen parallel zu einer Haupterstreckungsrichtung 64a des Winkelschleifers 52a verläuft. Das Bearbeitungswerkzeug 60a ist hierbei als Schleifscheibe ausgebildet. Es ist jedoch auch denkbar, dass das Bearbeitungswerkzeug 60a als Trenn- oder Polierscheibe ausgebildet ist. Das Werkzeugmaschinengehäuse 56a umfasst ein Motorgehäuse 66a zur Aufnahme einer Antriebseinheit 68a des Winkelschleifers 52a und ein Getriebegehäuse 70a zur Aufnahme einer Abtriebseinheit 22a der Werkzeugmaschinenbremsvorrichtung 10a. Die Antriebseinheit 68a ist dazu vorgesehen, das Bearbeitungswerkzeug 60a über die Abtriebseinheit 22a rotierend anzutreiben. Die Abtriebseinheit 22a ist über ein rotierend antreibbares Antriebselement 88a der Antriebseinheit 68a auf eine, einem Fachmann bereits bekannte Art und Weise mit der Antriebseinheit 68a verbunden. Das Antriebselement 88a ist als Ritzel ausgebildet, das drehfest mit einer Ankerwelle 90a der Antriebseinheit 68a verbunden ist (Figur 2). An dem Getriebegehäuse 70a ist ein Zusatzhandgriff 72a angeordnet. Der Zusatzhandgriff 72a erstreckt sich quer zur Haupterstreckungsrichtung 64a des Winkelschleifers 52a.

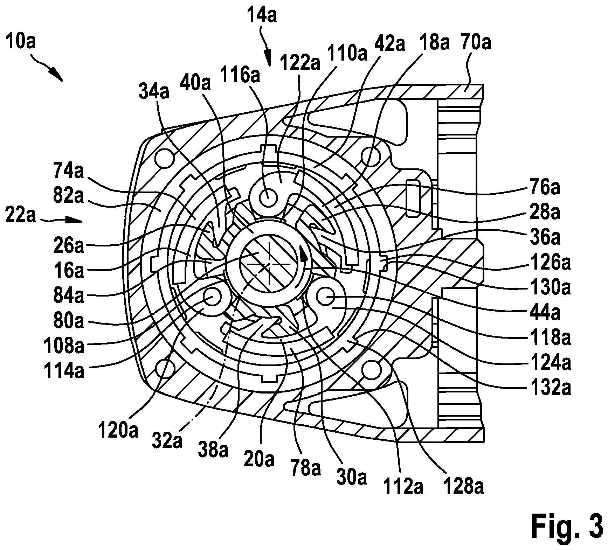

Die Werkzeugmaschinenbremsvorrichtung 10a ist an dem Getriebegehäuse 70a des Winkelschleifers 52a angeordnet (Figur 2). Ein Teilbereich der Werkzeugmaschinenbremsvorrichtung 10a erstreckt sich in das Getriebegehäuse 70a hinein. Somit ist ein Teilbereich der Werkzeugmaschinenbremsvorrichtung 10a von dem Getriebegehäuse 70a umschlossen. Die Werkzeugmaschinenbremsvorrichtung 10a umfasst eine mechanische Bremseinheit 14a, die drei beweglich gelagerte Bremselemente 16a, 18a, 20a aufweist (Figur 3), und die Abtriebseinheit 22a, die ein Abtriebselement 24a aufweist. Das Abtriebselement 24a ist als Tellerrad ausgebildet. Das als Tellerrad ausgebildete Abtriebselement 24a ist mittels einer Spielpassung auf einer drehbar gelagerten und als Spindel 80a ausgebildeten Ausgangswelle der Abtriebseinheit 22a angeordnet. Die Abtriebseinheit 22a umfasst ferner einen Lagerflansch 82a und ein im Lagerflansch 82a angeordnetes Lagerelement 84a zur Lagerung der Spindel 80a. Der Lagerflansch 82a ist mittels Befestigungselementen (hier nicht näher dargestellt) der Abtriebseinheit 22a lösbar mit dem Getriebegehäuse 70a verbunden. Ferner kann das Bearbeitungswerkzeug 60a mittels eines Befestigungselements (hier nicht näher dargestellt) zur Bearbeitung eines Werkstücks drehfest mit der Spindel 80a verbunden werden. Das Bearbeitungswerkzeug 60a kann somit in einem Betrieb des Winkelschleifers 52a rotierend angetrieben werden. Die Werkzeugmaschinenbremsvorrichtung 10a weist des Weiteren eine Ablaufsicherungseinheit 86a auf, die dazu vorgesehen ist, ein Ablaufen des Bearbeitungswerkzeugs 60a und/oder des Befestigungselements zur Befestigung des Bearbeitungswerkzeugs 60a von der Spindel 80a in einem Bremsmodus der Werkzeugmaschinenbremsvorrichtung 10a zu verhindern. Die Ablaufsicherungseinheit 86a ist hierbei als Aufnahmeflansch ausgebildet, der mittels eines Formschlusses drehfest mit der Spindel 80a verbunden ist. Es ist jedoch auch denkbar, dass die Ablaufsicherungseinheit 86a mittels anderer, einem Fachmann als sinnvoll erscheinender Verbindungsarten drehfest mit der Spindel 80a verbunden ist.

Die Bremselemente 16a, 18a, 20a der Bremseinheit 14a sind jeweils als Bremshebel ausgebildet (Figur 3). Hierbei sind die Bremselemente 16a, 18a, 20a im Lagerflansch 82a der Abtriebseinheit 22a angeordnet. Die Bremselemente 16a, 18a, 20a sind entlang einer Umfangsrichtung 44a gleichmäßig verteilt um die Spindel 80a angeordnet. Die Umfangsrichtung 44a verläuft in einer sich senkrecht zu einer Rotationsachse 32a des als Tellerrad ausgebildeten Abtriebselements 24a erstreckenden Ebene. Jeweils zwei der drei Bremselemente 16a, 18a, 20a, die entlang der Umfangsrichtung 44a hintereinander angeordnet sind, sind entlang der Umfangsrichtung 44a gleichmäßig voneinander beabstandet angeordnet. Ferner weisen die Bremselemente 16a, 18a, 20a jeweils einen Bremsbelag 74a, 76a, 78a auf. Die Bremsbeläge 74a, 76a, 78a sind, entlang einer zumindest im Wesentlichen senkrecht zur Rotationsachse 32a verlaufenden Richtung betrachtet, auf einer der Spindel 80a abgewandten Seite des jeweiligen Bremselements 16a, 18a, 20a angeordnet. Hierbei sind die Bremsbeläge 74a, 76a, 78a mittels einer formschlüssigen, kraftschlüssigen und/oder stoffschlüssigen Verbindung auf eine, einem Fachmann bereits bekannte Art und Weise mit dem jeweiligen Bremselement 16a, 18a, 20a verbunden. Zudem liegen die Bremsbeläge 74a, 76a, 78a entlang der Umfangsrichtung 44a und entgegen der Umfangsrichtung 44a jeweils an einem Anschlag (hier nicht näher dargestellt) des jeweiligen Bremselements 16a, 18a, 20a zur sicheren Übertragung von Scherkräften und/oder Schubkräften an.

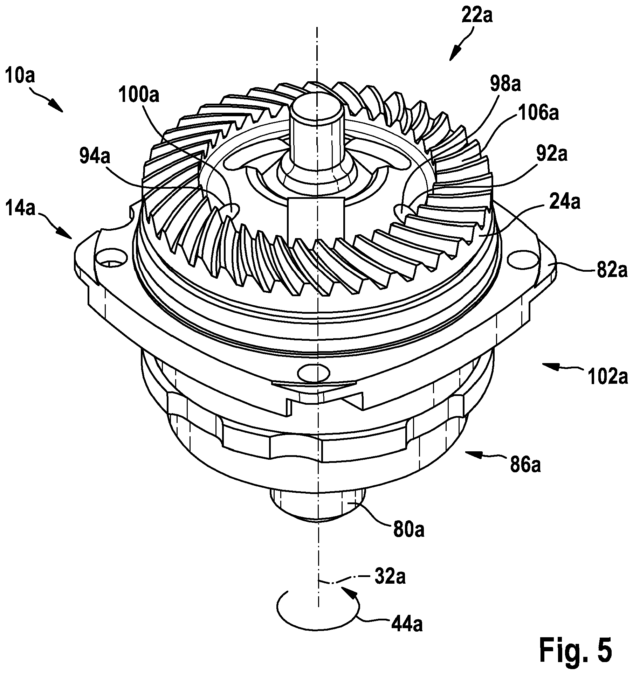

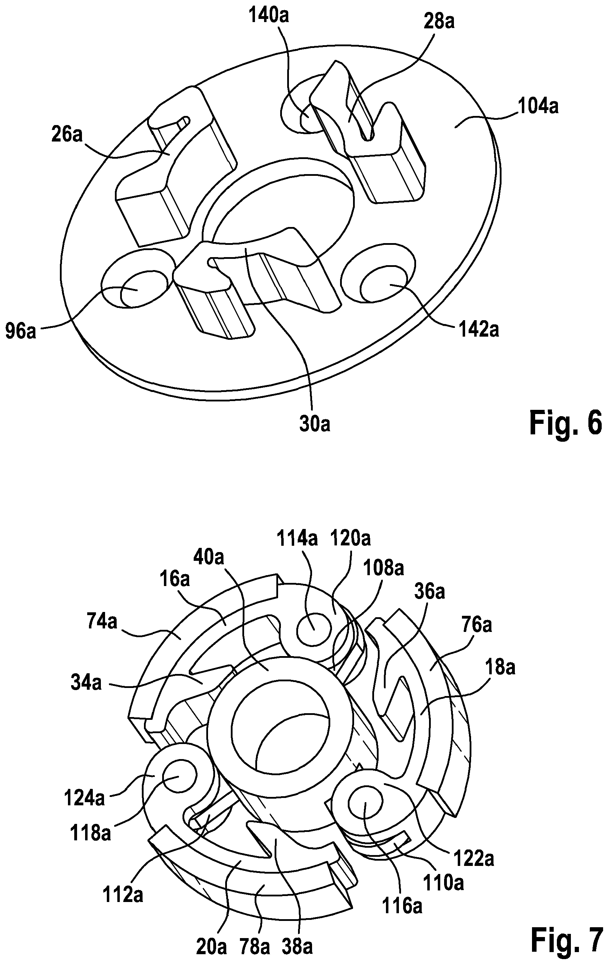

Die Bremseinheit 14a weist ferner drei Betätigungselemente 26a, 28a, 30a auf (Figur 3), die dazu vorgesehen sind, die Bremselemente 16a, 18a, 20a zumindest in einem Betriebszustand zumindest im Wesentlichen senkrecht zur Rotationsachse 32a des als Tellerrads ausgebildeten Abtriebselements 24a zu bewegen. Hierbei ist jeweils eines der Betätigungselemente 26a, 28a, 30a jeweils einem der Bremselemente 16a, 18a, 20a zugeordnet. Die Betätigungselemente 26a, 28a, 30a sind drehfest mit dem als Tellerrad ausgebildeten Abtriebselement 24a verbunden. Das Abtriebselement 24a weist drei als Gewindebohrungen ausgebildete Ausnehmungen 92a, 94a auf (in Figur 5 lediglich zwei dargestellt), die dazu vorgesehen sind, als Schrauben ausgebildete Befestigungselemente 98a, 100a der Bremseinheit 14a (in Figur 5 lediglich zwei dargestellt) zur Befestigung einer Trägerplatte 104a der Bremseinheit 14a aufzunehmen. Die Trägerplatte 104a weist hierbei drei Ausnehmungen 96a, 140a, 142a auf, in denen die Befestigungselemente 98a, 100a in einem montierten Zustand angeordnet sind. Die Betätigungselemente 26a, 28a, 30a sind einstückig mit der Trägerplatte 104a ausgebildet (Figur 6). Ferner sind die Betätigungselemente 26a, 28a, 30a in einem montierten Zustand, entlang der Umfangsrichtung 44a betrachtet, gleichmäßig entlang der Umfangsrichtung 44a an der Trägerplatte 104a angeordnet. Die Trägerplatte 104a ist in einem montierten Zustand an einer einer Verzahnung 106a des als Tellerrad ausgebildeten Abtriebselements 24a abgewandten Seite des Abtriebselements 24a angeordnet.

Zur Bewegung der Bremselemente 16a, 18a, 20a mittels der Betätigungselemente 26a, 28a, 30a weisen die Bremselemente 16a, 18a, 20a jeweils ein Auslöseelement 34a, 36a, 38a auf. Die Auslöseelemente 34a, 36a, 40a sind jeweils, entlang der senkrecht zur Rotationsachse 32a des Abtriebselements 24a verlaufenden Richtung betrachtet, an einer der Spindel 80a zugewandten Seite der Bremselemente 16a, 18a, 20a angeordnet, die dem jeweiligen Betätigungselement 26a, 28a, 30a zugewandt ist. Die Betätigungselemente 26a, 28a, 30a weisen zu einem formschlüssigen Zusammenwirken mit den Auslöseelementen 34a, 36a, 38a eine hakenförmige Ausgestaltung auf. Die Auslöseelemente 34a, 36a, 38a weisen hierbei eine mit der hakenförmigen Ausgestaltung der Betätigungselemente 26a, 28a, 30a korrespondierende hakenförmige Ausgestaltung auf. Somit hintergreifen sich die Betätigungselemente 26a, 28a, 30a und die Auslöseelemente 34a, 36a, 38a zumindest in einem Betriebszustand gegenseitig.

Ferner weist die Bremseinheit 14a ein Mitnehmerelement 40a auf, an dem die Bremselemente 16a, 18a, 20a schwenkbar gelagert sind (Figur 7). Das Mitnehmerelement 40a ist in einem montierten Zustand drehfest mit der Spindel 80a verbunden. Zur Lagerung der Bremselemente 16a, 18a, 20a weist das Mitnehmerelement 40a drei Lagerfortsätze 108a, 110a, 112a auf, die sich entlang der senkrecht zur Rotationsachse 32 des Abtriebselements 24a verlaufenden Richtung, erstrecken. Die Lagerfortsätze 108a, 110a, 112a sind entlang der Umfangsrichtung 44a gleichmäßig verteilt am Mitnehmerelement 40a angeordnet. Ferner weisen die Lagerfortsätze 108a, 110a, 112a jeweils eine Ausnehmung zur Aufnahme eines Lagerelements 114a, 116a, 118a der Bremseinheit 14a auf. Die Lagerelemente 114a, 116a, 118a sind als Bolzen ausgebildet. Die als Bolzen ausgebildeten Lagerelemente 114a, 116a, 118a greifen zur schwenkbaren Lagerung der Bremselemente 16a, 18a, 20a in Ausnehmungen der Bremselemente 16a, 18a, 20a ein. Die Ausnehmungen der Bremselemente 16a, 18a, 20a sind in Lagerlaschen 120a, 122a, 124a der Bremselemente 16a, 18a, 20a angeordnet. Die Lagerlaschen 120a, 122a, 124a weisen jeweils zwei Teilbereiche auf, in denen jeweils eine Ausnehmung der Bremselemente 16a, 18a, 20a angeordnet ist. Hierbei sind die Lagerfortsätze 108a, 110a, 112a in einem montierten Zustand, entlang der Rotationsachse 32a des Abtriebselements 24a betrachtet, jeweils zwischen zwei Teilbereichen der Lagerlaschen 120a, 122a, 124a angeordnet. Somit erstrecken sich die als Bolzen ausgebildeten Lagerelemente 114a, 116a, 118a, entlang der Rotationsachse 32a des Abtriebselements 24a betrachtet, durch die in den Teilbereichen der Lagerlaschen 120a, 122a, 124a angeordneten Ausnehmungen der Bremselemente 16a, 18a, 20a und durch die Ausnehmungen der Lagerfortsätze 108a, 110a, 112a. Die Lagerlaschen 120a, 122a, 124a sind jeweils an einem Ende der Bremselemente 16a, 18a, 20a angeordnet. Somit können die Bremselemente 16a, 18a, 20a zumindest in einem Betriebszustand jeweils eine Schwenkbewegung um eine zumindest im Wesentlichen parallel zur Rotationsachse 32a des Abtriebselements 24a verlaufende Längsachse des jeweiligen Lagerelements 114a, 116a, 118a ausführen.

Des Weiteren weist die Bremseinheit 14a ein Gegenbremselement 42a auf (Figur 3), das die Bremselemente 16a, 18a, 20a, in der senkrecht zur Rotationsachse 32a des Abtriebselements 24a verlaufenden Ebene betrachtet, entlang der Umfangsrichtung 44a umgibt. Das Gegenbremselement 42a ist hierbei als Bremstrommel ausgebildet. Hierbei ist das Gegenbremselement 42a mittels einer formschlüssigen Verbindung im Lagerflansch 82a der Abtriebseinheit 22a fixiert. Hierzu weist das Gegenbremselement 42a eine Vielzahl an Formschlusselementen 126a, 128a auf. Die Formschlusselemente 126a, 128a sind als Fortsätze ausgebildet, die, entlang der senkrecht zur Rotationsachse 32a des Abtriebselements 24a betrachtet, an einer den Bremselementen 16a, 18a, 20a abgewandten Seite des Gegenbremselements 42a angeordnet sind. Die Formschlusselemente 126a, 128a greifen zur Fixierung des Gegenbremselements 42a in einem montierten Zustand in Verbindungsausnehmungen 130a, 132a des Lagerflanschs 82a ein. Es ist jedoch auch denkbar, dass das Gegenbremselement 42a mittels einer anderen, einem Fachmann als sinnvoll erscheinenden Verbindungsart mit dem Lagerflansch 82a verbunden ist, wie beispielsweise mittels einer kraftschlüssigen und/oder formschlüssigen Verbindung. Hierbei ist es denkbar, dass das Gegenbremselement 42a beispielsweise mittels einer Presspassung und/oder mittels eines Spritzverfahrens mit dem Lagerflansch 82a verbunden ist.

Bei einer Inbetriebnahme des Winkelschleifers 52a wird das als Tellerrad ausgebildete Abtriebselement 24a mittels des als Ritzel ausgebildeten Antriebselements 88a der Antriebseinheit 68a angetrieben. Hierbei bewegt sich das Abtriebselement 24a zuerst relativ zum drehfest mit der Spindel 80a verbundenen Mitnehmerelement 40a, bis die Betätigungselemente 26a, 28a, 30a in Eingriff mit den Auslöseelementen 34a, 36a, 38a gelangen und die Bremselemente 16a, 18a, 20a somit entlang der senkrecht zur Rotationsrichtung 32a des Abtriebselements 24a verlaufenden Richtung in Richtung der Spindel 80a in die Lösestellung der Bremselemente 16a, 18a, 20a bewegen (Figur 3). Die Bremselemente 16a, 18a, 20a werden hierdurch von dem Gegenbremselement 42a weg bewegt. Zudem kommen die Betätigungselement 26a, 28a, 30a infolge der Bewegung relativ zum Mitnehmerelement 40a entlang der Umfangsrichtung 44a zur Anlage an Seiten der Lagerfortsätze 108a, 110a, 112a, die den Betätigungselementen 26a, 28a, 30a entlang der Umfangsrichtung 44a zugewandt sind. Sobald die Betätigungselemente 26a, 28a, 30a an den Seiten der Lagerfortsätze 108a, 110a, 112a, die den Betätigungselementen 26a, 28a, 30a entlang der Umfangsrichtung 44a zugewandt sind, anliegen und die Bremselemente 16a, 18a, 20a von dem Gegenbremselement 42a weg bewegt wurden, befinden sich die Bremselemente 16a, 18a, 20a in der Lösestellung. In der Lösestellung der Bremselemente 16a, 18a, 20a ist ein direkter Kontakt zwischen den Bremselementen 16a, 18a, 20a und dem Gegenbremselement 42a unterbunden (Figur 3). Infolge des Anliegens der Betätigungselemente 26a, 28a, 30a an den Lagerfortsätzen 108a, 110a, 112a und infolge des Eingreifens der Betätigungselemente 16a, 18a, 20a in die Auslöseelemente 34a, 36a, 38a wird die Drehbewegung des Abtriebselements 24a an das Mitnehmerelement 40a und somit an die Spindel 80a übertragen. Das Abtriebselement 24a, das Mitnehmerelement 40a, die an dem Mitnehmerelement 40a angeordneten Bremselemente 16a, 18a, 20a und die Spindel 80a drehen sich gemeinsam um die Rotationsachse 32a des Abtriebselements 24a. Somit drehen sich die Bremselemente 16a, 18a, 20a relativ zum Gegenbremselement 42a. Das mit der Spindel 80a drehfest verbundene Bearbeitungswerkzeug 60a wird infolge des Zusammenwirkens des Abtriebselements 24a, des Mitnehmerelements 40a und der Spindel 80a rotierend angetrieben. Somit kann mittels des Bearbeitungswerkzeugs 60a ein Werkstück bearbeitet werden.

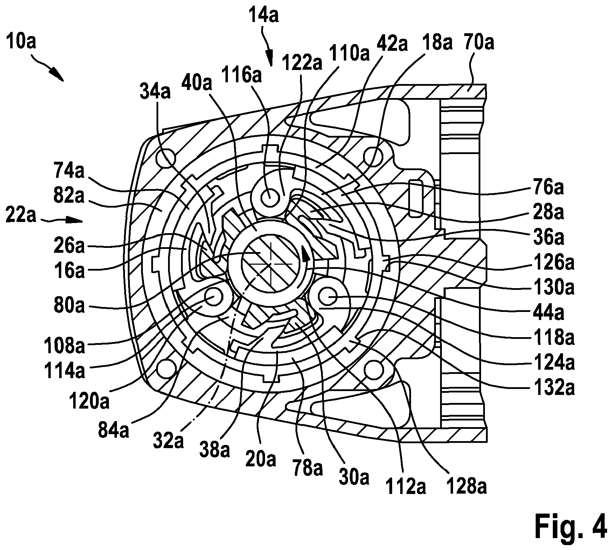

Bei einem Ausschalten des Winkelschleifers 52a wird das als Ritzel ausgebildete Antriebselement 88a abgebremst. Das auf der Spindel 80a befestigte Bearbeitungswerkzeug 60a dreht sich infolge einer Massenträgheit weiter. Die Spindel 80a wird somit ebenfalls weiter um die Rotationsachse 32a gedreht. Das Antriebselement 88a bremst das als Tellerrad ausgebildete Abtriebselement 24a ab. Das Abtriebselement 24a wird relativ zum Mitnehmerelement 40a um die Rotationsachse 32a verdreht, bis die Betätigungselemente 26a, 28a, 30a infolge der Relativbewegung an Seiten der Lagerfortsätze 108a, 110a, 112a anschlagen, die den Betätigungselementen 26a, 28a, 30a entgegen der Umfangsrichtung 44a zugewandt sind (Figur 4). Während der Relativbewegung des Abtriebselements 24a und des Mitnehmerelements 40a gelangen die Betätigungselemente 26a, 28a, 30a außer Eingriff mit den Auslöseelementen 36a, 38a, 40a. Die Bremselemente 16a, 18a, 20a werden infolge einer Fliehkraft mittels der schwenkbaren Lagerung entlang der senkrecht zur Rotationsachse 32a verlaufenden Richtung in Richtung des Gegenbremselements 42a bewegt. Es ist zudem denkbar, dass die Betätigungselemente 26a, 28a, 30a eine Bewegung der Bremselemente 16a, 18a, 20a in Richtung des Gegenbremselements 42a mittels rampenartigen Schrägflächen, die mit den Auslöseelementen 34a, 36a, 38a zusammenwirken, unterstützen. Infolge der Bewegung der Bremselemente 16a, 18a, 20a in Richtung des Gegenbremselements 42a gelangen die Bremsbeläge 74a, 76a, 78a mit der den Bremselementen 16a, 18a, 20a zugewandten Seite des Gegenbremselements 42a in Kontakt. Hierdurch wird mittels einer Reibung zwischen den Bremsbelägen 74a, 76a, 78a und dem Gegenbremselement 42a eine Bremskraft zum Bremsen der Spindel 80a und somit des Bearbeitungswerkzeugs 60a erzeugt. Somit sind die Bremselemente 16a, 18a, 20a in der Bremsstellung (Figur 4). Die Bremselemente 16a, 18a, 20a werden infolge der schwenkbaren Lagerung und infolge einer die Bremskraft erzeugende Reibkraft zwischen dem Mitnehmerelement 40a und dem Gegenbremselement 42a verkeilt. Die Reibkraft versucht hierbei die Bremselemente 16a, 18a, 20a weiter in Richtung des Gegenbremselements 42a relativ zum Mitnehmerelement 40a zu schwenken. Diese weitere Schwenkbewegung wird jedoch mittels des direkten Kontakts zwischen den Bremsbelägen 74a, 76a, 78a und dem Gegenbremselement 42a weitestgehend verhindert. Somit wird die Spindel 80a und das Bearbeitungswerkzeug 60a bis zu einem Stillstand abgebremst. Bei einer erneuten Inbetriebnahme des Winkelschleifers 52a sorgt das Zusammenwirken der Betätigungselemente 26a, 28a, 30a und der Auslöseelemente 34a, 36a, 38a für eine zuverlässige Überführung der Bremselemente 16a, 18a, 20a ausgehend von der Bremsstellung in die Lösestellung.

Die Bremseinheit 14a ist zusammen mit der Abtriebseinheit 22a als Montagemodul 102a ausgebildet (Figur 5). Somit bildet das Montagemodul 102a die Werkzeugmaschinenbremsvorrichtung 10a. Das Montagemodul 102a umfasst vier als Schrauben ausgebildete Befestigungselemente (hier nicht dargestellt). Die Schrauben sind dazu vorgesehen, das Montagemodul 102a lösbar mit dem Getriebegehäuse 70a zu verbinden. Ein Bediener kann das Montagemodul 102a bei Bedarf von dem Getriebegehäuse 70a demontieren. Der Winkelschleifer 52a und die Werkzeugmaschinenbremsvorrichtung 10a bilden somit ein Werkzeugmaschinensystem. Das Werkzeugmaschinensystem kann ein weiteres Montagemodul umfassen. Das weitere Montagemodul kann beispielsweis eine als Winkelgetriebe ausgebildete Abtriebseinheit umfassen. Das weitere Montagemodul könnte beispielsweise vom Bediener alternativ zum Montagemodul 102a am Getriebegehäuse 70a montiert werden. Ein Bediener hat somit die Möglichkeit, den Winkelschleifer 52a mit dem Montagemodul 102a mit der Bremseinheit 14a und der Abtriebseinheit 22a oder mit dem weiteren Montagemodul mit einer Abtriebseinheit auszustatten. Für einen Anwendungsfall, in dem der Winkelschleifer 52a entkoppelt von der Werkzeugmaschinenbremsvorrichtung 10a betrieben werden soll, kann das Montagemodul 102a durch das weitere Montagemodul des Werkzeugmaschinensystems von einem Bediener ausgetauscht werden. Hierzu demontiert der Bediener lediglich das Montagemodul 102a von dem Getriebegehäuse 70a und montiert das weitere Montagemodul am Getriebegehäuse 70a.

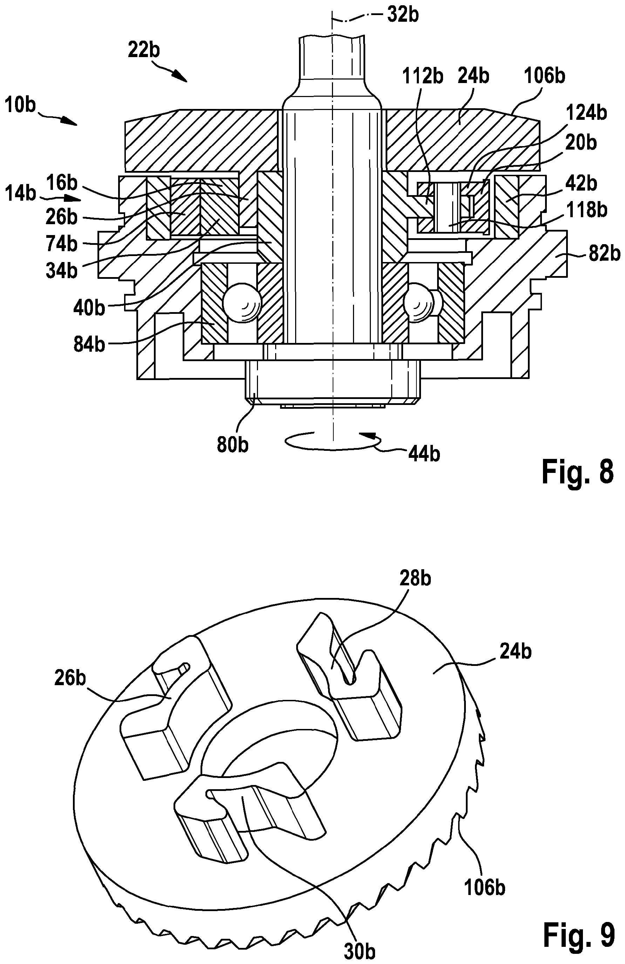

In Figuren 8 bis 11 sind alternative Ausführungsbeispiele dargestellt. Im Wesentlichen gleichbleibende Bauteile, Merkmale und Funktionen sind grundsätzlich mit den gleichen Bezugszeichen beziffert. Zur Unterscheidung der Ausführungsbeispiele sind den Bezugszeichen der Ausführungsbeispiele die Buchstaben a bis c hinzugefügt. Die nachfolgende Beschreibung beschränkt sich im Wesentlichen auf die Unterschiede zu dem ersten Ausführungsbeispiel in den Figuren 1 bis 7, wobei bezüglich gleichbleibender Bauteile, Merkmale und Funktionen auf die Beschreibung des ersten Ausführungsbeispiels in den Figuren 1 bis 7 verwiesen werden kann.

Figur 8 zeigt eine alternative Werkzeugmaschinenbremsvorrichtung 10b die an einem Getriebegehäuse eines analog zu dem in der Beschreibung der Figuren 1 bis 7 beschriebenen Winkelschleifer 52a ausgebildeten Winkelschleifer (hier nicht näher dargestellt) montierbar ist. Die Werkzeugmaschinenbremsvorrichtung 10b umfasst eine Bremseinheit 14b und eine Abtriebseinheit 22b. Die Bremseinheit 14b und die Abtriebseinheit 22b weisen einen zumindest im Wesentlichen analogen Aufbau zu der Bremseinheit 14a und der Abtriebseinheit 22a, die in der Beschreibung der Figuren 1 bis 7 beschrieben wurde, auf. Somit weist die Bremseinheit 14b drei beweglich gelagerte Bremselemente 16b, 18b (lediglich zwei in der Figur 8 dargestellt) auf und die Abtriebseinheit 22b weist ein Abtriebselement 24b auf. Ferner weist die Bremseinheit 14b drei Betätigungselemente 26b, 28b, 30b auf (Figur 9), die dazu vorgesehen sind, die Bremselemente 16b, 18b zumindest in einem Betriebszustand zumindest im Wesentlichen senkrecht zu einer Rotationsachse 32b des Abtriebselements 24b zu bewegen. Die Betätigungselemente 26b, 28b, 30b sind einstückig mit dem als Tellerrad ausgebildeten Abtriebselement 24b ausgebildet. Des Weiteren weist die Bremseinheit 14b ein als Bremstrommel ausgebildetes Gegenbremselement 42b auf. Das Gegenbremselement 42b ist mittels einer Presspassung in einem Lagerflansch 82b der Abtriebseinheit 22b fixiert. Hinsichtlich einer Funktionsweise der Bremseinheit 14b und der Abtriebseinheit 22b kann auf die Beschreibung der Figuren 1 bis 7 verweisen werden.

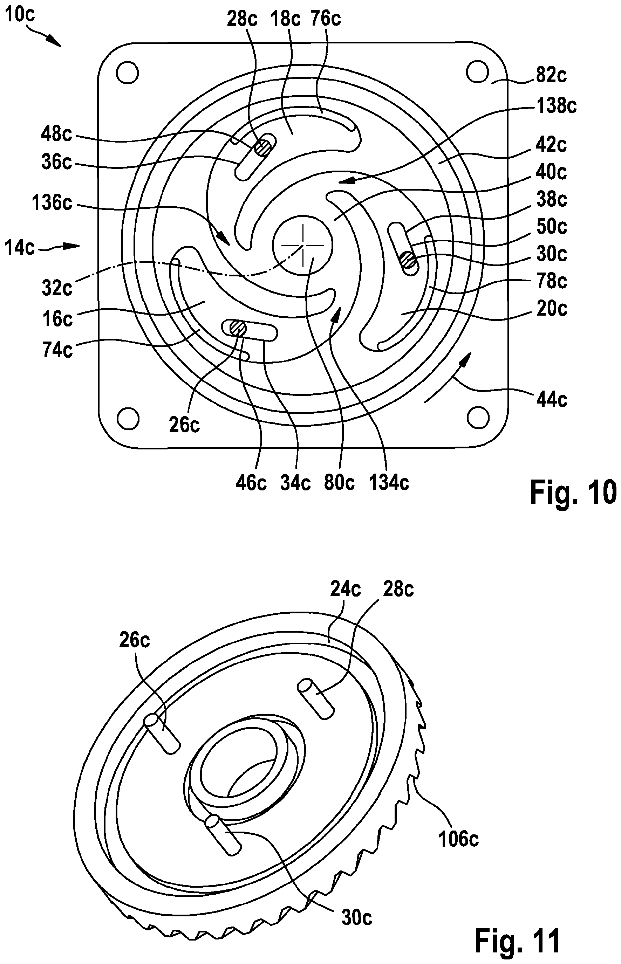

Figur 10 zeigt eine weitere alternative Werkzeugmaschinenbremsvorrichtung 10c die an einem Getriebegehäuse eines analog zu dem in der Beschreibung der Figuren 1 bis 7 beschriebenen Winkelschleifers 52a ausgebildeten Winkelschleifer (hier nicht näher dargestellt) montierbar ist. Die Werkzeugmaschinenbremsvorrichtung 10c umfasst eine Bremseinheit 14c und eine Abtriebseinheit 22c. Die Abtriebseinheit 22c weist einen zumindest im Wesentlichen analogen Aufbau zu der Abtriebseinheit 22a, die in der Beschreibung der Figuren 1 bis 7 beschrieben wurde, auf. Somit weist die Abtriebseinheit 22c ein als Tellerrad ausgebildetes Abtriebselement 24c auf. Das als Tellerrad ausgebildete Abtriebselement 24c ist mittels einer Spielpassung auf einer drehbar gelagerten und als Spindel 80c ausgebildeten Ausgangswelle der Abtriebseinheit 22c angeordnet.

Die Bremseinheit 14c weist drei beweglich gelagerte Bremselemente 16c, 18c, 20c auf. Des Weiteren weist die Bremseinheit 14c ein als Bremstrommel ausgebildetes Gegenbremselement 42c auf. Das Gegenbremselement 42c ist mittels einer Presspassung in einem Lagerflansch 82c der Abtriebseinheit 22c fixiert. Zudem weist die Bremseinheit 14c drei Betätigungselemente 26c, 28c, 30c auf, die dazu vorgesehen sind, die Bremselemente 16c, 18c, 20c zumindest in einem Betriebszustand zumindest im Wesentlichen senkrecht zu einer Rotationsachse 32c des Abtriebselements 24c zu bewegen. Hierzu umfasst die Bremseinheit 14c ein Kurvengetriebe, das drei Kurvenglieder 46c, 48c, 50c aufweist, die dazu vorgesehen sind, zu einer Bewegung der Bremselemente 16c, 18c, 20c mit den Betätigungselementen 26c, 28c, 30c zusammenzuwirken. Die Kurvenglieder 46c, 48c, 50c sind an den Bremselementen 16c, 18c, 20c angeordnet. Die Kurvenglieder 46c, 48c, 50c sind als Kurvenbahnen ausgebildet. Die Kurvenbahnen werden hierbei von Steuerausnehmungen gebildet, die in die Bremselemente 16c, 18c, 20c eingebracht sind. Es ist jedoch auch denkbar, dass die Kurvenglieder 46c, 48c, 50c eine andere, einem Fachmann als sinnvolle Ausgestaltung aufweisen, wie beispielsweise rippenartige Fortsätze usw. Die Kurvenglieder 46c, 48c, 50c bilden somit Auslöseelemente 34c, 36c, 38c der Bremselemente 16c, 18c, 20c. Die Betätigungselemente 26c, 28c, 30c greifen in die Kurvenglieder 46c, 48c, 50c ein. Ferner sind die Betätigungselemente 26c, 28c, 30c einstückig mit dem Abtriebselement 24c ausgebildet. Hierbei sind die Betätigungselemente 26c, 28c, 30c bolzenförmig ausgebildet und erstrecken sich entlang einer zumindest im Wesentlichen parallel zur Rotationsachse 32c des Abtriebselements 24c verlaufenden Richtung an einer von einer Verzahnung 106c des Abtriebselements 24c abgewandten Seite weg von dem Abtriebselement 24c (Figur 11).

Die Bremselemente 16c, 18c, 20c sind einstückig mit einem Mitnehmerelement 40c der Bremseinheit 14c ausgebildet. Das Mitnehmerelement 40c ist drehfest mit der Spindel 80c der Abtriebseinheit 22c verbunden. Die Bremselemente 16c, 18c, 20c sind jeweils mittels eines elastischen Teilbereichs 134c, 136c, 138c des Mitnehmerelements 40c relativ zu einem direkt mit der Spindel 80c in Kontakt befindlichen Bereichs des Mitnehmerelements 40c schwenkbar gelagert. Es ist jedoch auch denkbar, dass die Bremselemente 16c, 18c, 20c mittels eines Filmscharniers und/oder einer anderen, einem Fachmann als sinnvoll erscheinenden Gelenkverbindung miteinander verbunden sind. Ferner sind die Bremselemente 16c, 18c, 20c mittels den elastischen Teilbereichen 134c, 136c, 138c stoffschlüssig mit dem direkt mit der Spindel 80c in Kontakt befindlichen Bereich des Mitnehmerelements 40c verbunden.

Infolge des Eingreifens der Betätigungselemente 26c, 28c, 30c in die Kurvenglieder 46c, 48c, 50c, der schwenkbaren Lagerung der Bremselemente 16c, 18c, 20c mittels den elastischen Teilbereichen 134c, 136c, 138c und infolge einer Relativbewegung des Abtriebselements 24c und des Mitnehmerelements 40c werden die Bremselemente 16c, 18c, 20c im Wesentlichen analog zu den in der Beschreibung der Figuren 1 bis 7 beschriebenen Bremselemente 16a, 18a, 20a in Richtung eines Gegenbremselements 42c der Bremseinheit 14c in eine Bremsstellung und/oder in Richtung der Spindel 80c in eine Lösestellung bewegt.

## Patentansprüche

1. Werkzeugmaschinenbremsvorrichtung, insbesondere Handwerkzeugmaschinenbremsvorrichtung, einer tragbaren Werkzeugmaschine, mit zumindest einer mechanischen Bremseinheit (14a; 14b; 14c), die zumindest ein beweglich gelagertes Bremselement (16a, 18a, 20a; 16b, 18b; 16c, 18c, 20c) aufweist und die dazu vorgesehen ist, das Bremselement (16a, 18a, 20a; 16b, 18b; 16c, 18c, 20c) infolge eines Trägheitsmoments und/oder infolge eines Antriebsmoments in eine Bremsstellung und/oder in eine Lösestellung zu überführen, und mit zumindest einer Abtriebseinheit (22a; 22b; 22c), die zumindest ein als Zahnrad ausgebildetes Abtriebselement (24a; 24b; 24c) aufweist und die mittels einer Antriebseinheit (68a) der tragbaren Werkzeugmaschine antreibbar ist sowie von der Antriebseinheit (68a) erzeugte Kräfte und/oder Drehmomente auf ein Bearbeitungswerkzeug (60a) überträgt,
**dadurch gekennzeichnet, dass** die Bremseinheit (14a; 14b; 14c) zumindest ein Betätigungselement (26a, 28a, 30a; 26b, 28b, 30b; 26c, 28c, 30c) aufweist, das dazu vorgesehen ist, das Bremselement (16a, 18a, 20a; 16b, 18b; 16c, 18c, 20c) zumindest in einem Betriebszustand zumindest im Wesentlichen senkrecht zu einer Rotationsachse (32a; 32b, 32c) des Abtriebselements (24a; 24b; 24c) zu bewegen.

2. Werkzeugmaschinenbremsvorrichtung nach Anspruch 1,
**dadurch gekennzeichnet, dass** das Betätigungselement (26a, 28a, 30a; 26b, 28b, 30b; 26c, 28c, 30c) zumindest in einem Betriebszustand formschlüssig mit einem Auslöseelement (34a, 36a, 38a; 34b; 34c, 36c, 38c) des Bremselements (16a, 18a, 20a; 16b, 18b; 16c, 18c, 20c) zusammenwirkt.

3. Werkzeugmaschinenbremsvorrichtung nach einem der vorhergehenden Ansprüche,
**dadurch gekennzeichnet, dass** das Betätigungselement (26a, 28a, 30a; 26b, 28b, 30b; 26c, 28c, 30c) drehfest mit dem Abtriebselement (24a; 24b; 24c) verbunden ist.

4. Werkzeugmaschinenbremsvorrichtung nach einem der vorhergehenden Ansprüche,
**dadurch gekennzeichnet, dass** die Bremseinheit (14a; 14b; 14c) zumindest ein Mitnehmerelement (40a; 40b; 40c) aufweist, an dem das Bremselement (16a, 18a, 20a; 16b, 18b; 16c, 18c, 20c) schwenkbar gelagert ist.

## Claims

1. Power-tool braking device, in particular hand-held power-tool braking device, of a portable power tool, comprising at least one mechanical braking unit (14a; 14b; 14c), which has at least one movably mounted braking element (16a, 18a, 20a; 16b, 18b; 16c, 18c, 20c) and which is provided to put the braking element (16a, 18a, 20a; 16b, 18b; 16c, 18c, 20c) into a braking position and/or into a release position as a result of a moment of inertia and/or as a result of a drive moment, and comprising at least one output unit (22a; 22b; 22c), which has at least one output element (24a; 24b; 24c) realized as a gear wheel and which can be driven by means of a drive unit (68a) of the portable power tool and transmits forces and/or torques, generated by the drive unit (68a), to a working tool (60a),
**characterized in that** the braking unit (14a; 14b; 14c) has at least one actuating element (26a, 28a, 30a; 26b, 28b, 30b; 26c, 28c, 30c), which is provided to move the braking element (16a, 18a, 20a; 16b, 18b; 16c, 18c, 20c), at least in one operating state, at least substantially perpendicularly in relation to a rotation axis (32a; 32b, 32c) of the output element (24a; 24b; 24c).

2. Power-tool braking device according to Claim 1,
**characterized in that** the actuating element (26a, 28a, 30a; 26b, 28b, 30b; 26c, 28c, 30c), at least in one operating state, acts in combination, in a form-fitting manner, with a release element (34a, 36a, 38a; 34b; 34c, 36c, 38c) of the braking element (16a, 18a, 20a; 16b, 18b; 16c, 18c, 20c).

3. Power-tool braking device according to either one of the preceding claims,
**characterized in that** the actuating element (26a, 28a, 30a; 26b, 28b, 30b; 26c, 28c, 30c) is connected to the output element (24a; 24b; 24c) in a rotationally fixed manner.

4. Power-tool braking device according to any one of the preceding claims,
**characterized in that** the braking unit (14a; 14b; 14c) has at least one driver element (40a; 40b; 40c), on which the braking element (16a, 18a, 20a; 16b, 18b; 16c, 18c, 20c) is pivotally mounted.

## Revendications

1. Dispositif de frein pour outil motorisé, en particulier ensemble de frein pour outil manuel motorisé, d'un outil motorisé portable, présentant au moins une unité mécanique de freinage (14a; 14b; 14c) qui présente au moins un élément de frein (16a, 18a, 20a; 16b, 18b; 16c, 18c, 20c) monté mobile et qui est prévue pour transférer l'élément de frein (16a, 18a, 20a; 16b, 18b; 16c, 18c, 20c) dans une position de freinage et/ou une position de libération suite à un couple d'inertie et/ou à un couple d'entraînement et présentant au moins une unité entraînée (22a; 22b; 22c) qui présente au moins un élément entraîné (24a; 24b; 24c) configuré comme roue dentée et qui peut être entraînée au moyen d'une unité d'entraînement (68a) de l'outil motorisé portable, et qui transfère sur un outil de traitement (60a) des forces et/ou des couples de rotation générés par l'unité d'entraînement (68a), **caractérisé en ce que**
l'unité de freinage (14a; 14b; 14c) présente au moins un élément d'actionnement (26a, 28a, 30a; 26b, 28b, 30b; 26c, 28c, 30c) prévu pour, au moins dans un état de fonctionnement, déplacer l'élément de frein (16a, 18a, 20a; 16b, 18b; 16c, 18c, 20c) au moins essentiellement à la perpendiculaire d'un axe de rotation (32a; 32b; 32c) de l'élément entraîné (24a; 24b; 24c).

2. Dispositif de frein pour outil motorisé selon la revendication 1, **caractérisé en ce qu'**au moins dans un état de fonctionnement, l'élément d'actionnement (26a, 28a, 30a; 26b, 28b, 30b; 26c, 28c, 30c) coopère en correspondance géométrique avec un élément de déclenchement (34a, 36a, 38a; 34b; 34c, 36c, 38c) de l'élément de frein (16a, 18a, 20a; 16b, 18b; 16c, 18c, 20c).

3. Dispositif de frein pour outil motorisé selon l'une des revendications précédentes, **caractérisé en ce que** l'élément d'actionnement (26a, 28a, 30a; 26b, 28b, 30b; 26c, 28c, 30c) est relié à rotation solidaire à l'élément entraîné (24a; 24b; 24c).

4. Dispositif de frein pour outil motorisé selon l'une des revendications précédentes, **caractérisé en ce que** l'unité de freinage (14a; 14b; 14c) présente au moins un élément d'entraînement (40a; 40b; 40c) sur lequel l'élément de frein (16a, 18a, 20a; 16b, 18b; 16c, 18c, 20c) est monté à pivotement.
